# EUROPÄISCHE PATENTSCHRIFT

(11) **EP 1 142 356 B1**
(45) Veröffentlichungstag und Bekanntmachung des Hinweises auf die Patenterteilung: **28.06.2006**
(21) Anmeldenummer: 98959695.2
(22) Anmeldetag: 24.12.1998
(51) Int. Cl.: H04Q 7/20, H04Q 7/38, H04B 3/54

(54) **KOMMUNIKATIONSSYSTEM, KOMMUNIKATIONSVERFAHREN UND DAFÜR GEEIGNETE VORRICHTUNGEN**
COMMUNICATION SYSTEM, COMMUNICATION METHOD AND CORRESPONDING DEVICES
SYSTEME DE COMMUNICATION, PROCEDE DE COMMUNICATION ET DISPOSITIFS APPROPRIES

(43) Veröffentlichungstag der Anmeldung: 10.10.2001
(73) Patentinhaber: Swisscom Mobile AG, 3050 Bern (CH)
(72) Erfinder: RITTER, Rudolf, CH-3052 Zollikofen (CH)
(74) Vertreter: Vogel, Dany
(86) Internationale Anmeldenummer: PCT/CH1998/000553
(87) Internationale Veröffentlichungsnummer: WO 2000/040041

(56) Entgegenhaltungen:
- WO-A-98/28865
- DE-A- 4 031 092
- GB-A- 2 322 998
- US-A- 4 777 652
- "POWERLINE COMMUNICATION: WIRELESS TECHNOLOGY" EDN ELECTRICAL DESIGN NEWS, Bd. 41, Nr. 12, 6. Juni 1996, Seite 71/72, 74, 76, 78 XP000622003

## Beschreibung

Die vorliegende Erfindung betrifft ein Kommunikationssystem, ein Kommunikationsverfahren und geeignete Vorrichtungen. Insbesondere betrifft die vorliegende Erfindung ein Kommunikationssystem gemäss dem Oberbegriff des Anspruchs 1, ein Kommunikationsverfahren gemäss dem Oberbegriff des Anspruchs 22 und dafür geeignete Vorrichtungen.

Kommunikationssysteme, in welchen Teilnehmer sich mit ihren Mobilgeräten (durch ein sogenanntes Roaming) in Kommunikationsnetze verschieben können, die beispielsweise von fremden Netzwerkbetreibern betrieben werden, sind bekannt. Die praktische Realisierung von Roaming zwischen Mobilnetzen erfordert typischerweise gegenseitige Übereinkommen zwischen den betroffenen Netzwerkbetreibern, vorerst müssen die betroffenen Netzwerke jedoch entsprechende geeignete Mechanismen und Vorrichtungen aufweisen um Roaming auch technisch zu ermöglichen. Insbesondere das vom European Telecommunications Standards Institute (ETSI, F-06921 Sophia Antipolis, Cedex, France) definierte globale System für Mobilkommunikation (Global System for Mobile Communications, GSM) ermöglicht es Benutzern von Mobilgeräten, sich vom Heimmobilnetz (Home Public Land Mobile Network, HPLMN) in besuchte Mobilnetze (Visited Public Land Mobile Network VPLMN) zu verschieben. In einem GSM-Mobilnetz sind Benutzeridentifizierungen verknüpft mit Rufnummern und Benutzerdaten in einem Home Location Register (HLR) des HPLMN abgelegt. Die Benutzerdaten umfassen unter anderem Aufenthaltsinformationen für einen betreffenden Benutzer, welche beispielsweise von einem Visitor Location Register (VLR) eines VPLMN an das genannte HLR übertragen werden. Das VLR erkennt das HLR eines besuchenden Benutzers anhand dessen Benutzeridentifizierung, welche in einem mit dem Mobilgerät des Benutzers entfernbar verbundenen Identifikationsmodul gespeichert ist und vom Mobilgerät an das VLR übertragen wird. Das VLR überträgt an das HLR, entweder auf Anfrage oder automatisch, eine sogenannte Roaming-Nummer, die vom HLR zur Weiterleitung von Anrufen an das betreffende Mobilgerät im VPLMN verwendet wird. Ein sogenanntes Mobile Switching Centre (MSC) des GSM-Netzes hat Zugriff auf die im HLR abgelegten Informationen und dient, unter anderem, als Schnittstelle zwischen dem Mobilnetz und dem öffentlichen geschalteten Telefonnetz (Public Switched Telephone Network, PSTN) und leitet Anrufe von anrufenden Endgeräten an genannte Mobilgeräte, respektive von genannten Mobilgeräten an angerufene Endgeräte. Obwohl die definierte Netzwerkarchitektur und die diesbezüglichen Dienste das sogenannte Roaming von Mobilgeräten in VPLMN unterstützen, ist dies nur dann möglich, wenn sich ein Benutzer im abgedeckten Funkbereich des VPLMN befindet. Insbesondere in grossen Ländern mit Gebieten, die beispielsweise wenig besiedelt sind, kann es durchaus sein, dass die Funkabdeckung nur in den Ballungszentren gewährleistet ist; zudem gibt es Gebäude und Lokalitäten, in denen kein guter Funkempfang möglich ist.

In der Patentanmeldung GB 2322998 A wird ein Verfahren für die Verbindung von Kammunikationsnetzwerken beschrieben, welches Benutzern ermöglicht, mit ihren Mobilgeräten in besuchten Gebieten zu kommunizieren, die nur von einem Netzbetreiber durch Funk abgedeckt sind, mit welchem betreffende Benutzer keinen Teilnehmervertrag haben. Gemäss der Lehre von GB 2322998 A wird eine entsprechende Einbuchungsanforderung von einem besuchten Kommunikationsnetz an eine intemationale Roaming-Plattform weitergeleitet, welche überprüft, ob das besuchte Kommunikationsnetz und das Heimnetzwerk des betreffenden besuchenden Benutzers einen Dienstleistungsvertrag abgeschlossen haben. Gegebenenfalls leitet die intemationale Roaming-Plattform gemäss GB 2322998 A die Einbuchungsanforderung an das Home Location Register (HLR) des Heimnetzes weiter. Vom HLR des Heimnetzes werden Benutzerdaten zur Authentfizierung des betreffenden besuchenden Benutzers gemäss GB 2322998 A über die internationale Roaming-Plattform an das besuchte Kommunikationsnetz übertragen, die Benutzerdaten werden im Visitor Location Register (VLR) des besuchten Kommunikationsnetzes gespeichert, und Aufenthaltsinformationen betreffend den besuchenden Benutzer werden im HLR des Heimnetzes des Benutzers gespeichert.

In der Patentanmeldung WO 98/28865 werden eine Vorrichtung und ein Verfahren für die drahtlose Kommunikation in einem Verkehrsmittel beschrieben, zum Beispiel in einem Zug, einer Untergrundbahn oder einer Strassenbahn. Gemäss der in WO 98/28865 beschriebenen Lehre werden im Verkehrsmittel mindestens eine Basisstation, die für die drahtlose Kommunikation mit drahtlosen Telefonen eingerichtet ist, mit mindestens einem Transceiver fest verbunden, der mit der Stromleitung des Verkehrsmittels verbunden ist. Gemäss der Lehre von WO 98128865 sind sowohl die Basisstation(en) als auch der (die) Transceiver(s) im Innern oder auf der Aussenseite des Verkehrsmittels montiert. Ein Fahrgast mit einem drahtlosen Telefon kann gemäss der Lehre von WO 98/28865 über die im Verkehrsmittel fest montierte Basisstation, über die feste Verbindung von dieser Basisstation zum im Verkehrsmittel fest montierten Transceiver, und von diesem Transceiver über die Stromleitung des Verkehrsmittels mit festinstallierten Transceivern kommunizieren, die entlang der Fahrbahn aufgestellt und ebenfalls mit der Stromleitung verbunden sind. Von den entlang der Fahrbahn aufgestellten Transceivem kann die Kommunikationsstrecke gemäss der Lehre von WO 98/28865 über ein angeschlossenes Kommunikationsnetz weitergeführt werden.

Es ist eine Aufgabe dieser Erfindung, ein neues Kommunikationssystem, ein neues Kommunikationsverfahren sowie neue dafür geeignete Vorrichtungen vorzuschlagen, welche es Benutzern von Mobilgeräten insbesondere ermöglichen, mit ihren Mobilgeräten in Gebieten zu kommunizieren, die nicht durch Funk abgedeckt sind und/oder die nur von einem Netzbetreiber durch Funk abgedeckt sind, mit welchem betreffende Benutzer keinen Teilnehmervertrag haben.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass mindestens gewisse Mobilgeräte, beispielsweise Mobilfunktelefone oder Laptop- oder Palmtop-Computer mit geeigneten Kommunikationsmodulen für Mobilnetze, beispielsweise GSM- oder UMTS-Netze, jeweils durch deren Benutzer mittels eines Verbindungsmoduls an ein Niederspannungsnetz angeschlossen werden können, wobei das Verbindungsmodul zum Anschluss an das Niederspannungsnetz jeweils einen Verbindungsstecker umfasst, mittels welchen Verbindungssteckern das Verbindungsmodul jeweils über Steckdosen des Niederspannungsnetzes mit dem Niederspannungsnetz verbindbar ist, und wobei das Verbindungsmodul zur Verbindung mit dem betreffenden Mobilgerät ein Schnittstellenmodul umfasst, und dass das Verbindungsmodul ein geeignetes Stromleitungskommunikationsmodul umfasst, mittels welchem das betreffende Mobilgerät über das Niederspannungsnetz mit anderen Einheiten kommunizieren kann, die über ein Stromleitungskommunikationsmodul an das Niederspannungsnetz angeschlossen sind. Dies hat den Vorteil, dass diese Mobilgeräte auch in Gebieten kommunizieren können, die nicht im Funkbereich eines Mobilnetzes liegen und/oder die im Funkbereich eines Mobilnetzes liegen, für welches der Benutzer des betreffenden Mobilgeräts keinen Teilnehmervertrag hat, die aber ein Stromnetz, insbesondere ein Niederspannungsnetz, umfassen, an welches diese Mobitgeräte angeschlossen werden können.

In der Patentschrift DE 40 31 092 A1 wird ein Femsprechsystem beschrieben, in welchem mit Hilfe von zwei Modems der Anschluss eines Femsprechapparates an das öffentliche Telefonnetz über Stromverteilungsleitungen gestattet. Der Vorieil der in DE 40 31 092 A1 beschriebenen Erfindung besteht darin, dass eine zu grosse Distanz eines Femsprechapparates zu einer Telefonanschlussbuchse mit dem Modemanschluss an eine Stromleitung und mit dem Modemanschluss der Telefonanschlussbuchse an diese Stromleitung überbrückt werden kann. Die in DE 40 31 092 A1 beschriebene Erfindung setzt einen lokälen Telefonanschluss voraus und eignet sich nur für ein Endgerät, welches über diesen Telefonanschluss an das öffentliche Telefonnetz angeschlossen werden soll.

Vorzugsweise umfasst das Kommunikationssystem gemäss der vorliegenden Erfindung mindestens ein Visitor Location Register (VLR), welches über ein genanntes Stromleitungskommunikationsmodul mit mindestens einem genannten Stromnetz verbunden ist, und die an ein Stromnetz angeschlossenen Mobilgeräte übertragen Benutzeridentifizierungen, welche in entfernbar mit den Mobilgeräten verbundenen Identifikationsmodulen gespeichert sind, über ein Stromnetz an dieses Stromnetz-VLR. Dadurch können sich diese Mobilgeräte, respektive deren Benutzer, ähnlich wie in einem konventionellen Mobilnetz beim VLR registrieren.

In einer Ausführungsvariante umfasst ein solches Stromnetz-VLR eine Tabelle, in welcher Adressinformationen betreffend die genannten Verbindungsmodule mit den zugehörigen genannten Benutzeridentifizierungen verknüpft und gespeichert sind. Dies hat den Vorteil, dass ein betreffendes Verbindungsmodul und damit das zugehörige Mobilgerät, respektive dessen Benutzer, in einem Stromnetz identifiziert und adressiert werden können.

In einer bevorzugten Ausführungsvariante sind in dieser Tabelle zusätzlich Roaming-Nummern mit den zugehörigen Benutzeridentifizierungen verknüpft und gespeichert. Wie in einem konventionellen Mobilnetz können solche Roaming-Nummem vom Stromnetz-VLR, entweder auf Anfrage oder automatisch, an das Home Location Register eines betreffenden Benutzers übertragen werden, wo sie zur Weiterleitung von Anrufen an das betreffende Mobilgerät in einem Stromnetz verwendet werden.

In einem konventionellen Mobilnetz sind im HLR eines Benutzers unter anderem Aufenthaltsinformationen für diesen Benutzer abgespeichert, welche beispielsweise von einem Visitor Location Register (VLR) eines VPLMN an das HLR übertragen werden. Vorzugsweise umfassen die Aufenthaltsinformationen, die vom Stromnetz-VLR an das HLR eines Benutzers übertragen werden, Adressinformationen betreffend das genannte Stromnetz-VLR, wodurch der Aufenthalt des betreffenden Benutzers bestimmt ist und das Stromnetz-VLR adressiert werden kann.

In einer Ausführungsvariante umfassen die Roaming-Nummem, die Mobilgeräte in einem Stromnetz betreffen, Adressinformationen betreffend ein genanntes Verbindungsmodul. Dadurch können Benutzer in einem Stromnetz, respektive deren Mobilgeräte, über die zugehörigen Verbindungsmodule adressiert werden.

In einer bevorzugten Ausführungsvariante ist ein Stromnetz-VLR über ein Verbindungsnetz mit dem HLR des Benutzers und/oder mit einem Mobile Switching Centre (MSC) im Heimmobilnetz (Home Public Land Mobile Network, HPLMN) des Benutzers verbunden. Das Verbindungsnetz 8 ist beispielsweise ein Local oder Wide Area Network (LAN oder WAN), ein dedizierter Backbone, ein Intranet oder das Intemet, und umfasst beispielsweise ein Signalisierungssystem Nummer 7 (SS7). Das Stromnetz-VLR kann beispielsweise mittels MAP-Meldungen mit anderen an das Verbindungsnetz angeschlossenen Netzwerkeinheiten kommunizieren.

Vorzugsweise umfasst das Stromnetz-VLR ein Gateway-Modul, welches Anrufe von Endgeräten, welche Anrufe über das genannte Verbindungsnetz an das genannte Stromnetz-VLR weitergeleitet wurden, an betreffende mit einem an das Stromnetz-VLR angeschlossenen Stromnetz verbundene Mobilgeräte weiterleiten kann, und welches Gateway-Modul Anrufe von genannten mit einem an das Stromnetz-VLR angeschlossenen Stromnetz verbundene Mobilgeräte über das genannte Verbindungsnetz an eine betreffende Netzwerkeinheit, insbesondere ein zweites genanntes Stromnetz Visitor Location Register, zur Weiterleitung an ein angerufenes Endgerät weiterleiten kann. Ein solches Gateway-Modul erweitert die Funktionalität des Stromnetz-VLR mit Funktionen, die typischerweise in einer Schaltzentrale, beispielsweise in einem Mobile Switching Centre (MSC) ausgeführt werden, so dass Anrufe beispielsweise auch zwischen mehreren Stromnetz-VLR, die an verschiedene Stromnetze angeschlossen sind, weitergeleitet werden können.

Vorzugsweise kann das Gateway-Modul Anrufe an betreffende mit dem Stromnetz verbundene Mobilgeräte weiterleiten, die von einem Mobile Switching Centre von anrufenden Endgeräten entgegengenommen und an das Stromnetz-VLR weitergeleitet wurden, respektive Anrufe von mit dem Stromnetz verbundenen Mobilgeräten zur Weiterleitung an ein angerufenes Endgerät an ein betreffendes Mobile Switching Centre weiterleiten. Ein Stromnetz-VLR mit einem solchen Gateway-Modul hat den Vorteil, dass die Kommunikation zwischen Mobilgeräten, die mit einem Stromnetz verbunden sind, und Endgeräten in konventionellen Mobilnetzen und/oder Festnetzen, beispielsweise das öffentliche geschaltete Telefonnetz (Public Switched Telephone Network, PSTN), für die; betroffenen Endgeräte, respektive deren Benutzer, transparent über das Stromnetz-VLR abgewickelt werden können.

In einer bevorzugten Ausführungsvariante umfasst das Stromnetz-VLR ein Verrechnungsmodul, welches Dienste, die für ein betreffendes mit dem Stromnetz verbundenes Mobilgerät ausgeführt wurden, erfassen und verrechnen kann. Diese Ausführungsvariante hat den Vorteil, dass die Kosten direkt an deren Entstehungsort erfasst werden, was insbesondere die Erfassung von Stromnetz-spezifischen Kosten vereinfacht. In einer Ausführungsvariante kann das Verrechnungsmodul erfasste Dienste einem betreffenden mit dem Stromnetz verbundenen Mobilgerät direkt über das genannte Stromnetz verrechnen, beispielsweise indem die Kosten auf einem vorausbezahlten Konto belastet werden, welches sich beispielsweise auf einem mit dem betreffenden Mobilgerät entfernbar verbundenen Identifikationsmodul, beispielsweise eine Chipkarte, befindet. In einer anderen Ausführungsvariante kann das Verrechnungsmodul für erfasste Dienste sogenannte Call Detail Records (CDR) erzeugen und diese zur Verrechnung an eine Clearingstelle übennitteln.

In verschiedenen Ausführungsvarianten umfassen die Verbindungsmodule eine kontaktbehaftete Schnittstelle und/oder eine kontaktlose Schnittstelle, zum Beispiel eine Infrarotschnittstelle, eine induktive Schnittstelle, oder eine hochfrequente Funkschnittstelle, zum Beispiel eine sogenannte "Bluetooth-Schnittstelle", über welche sie mit den genannten Mobilgeräten verbunden werden können.

In einer Ausführungsvariante umfassen die Verbindungsmodule Lademodule, mittels welchen Energiespeicher zur Betreibung der genannten Mobilgeräte am genannten Stromnetz aufgeladen werden können.

Nachfolgend wird eine Ausführung der vorliegenden Erfindung anhand eines Beispieles beschrieben. Das Beispiel der Ausführung wird durch die folgende einzige beigelegte Figur illustriert:

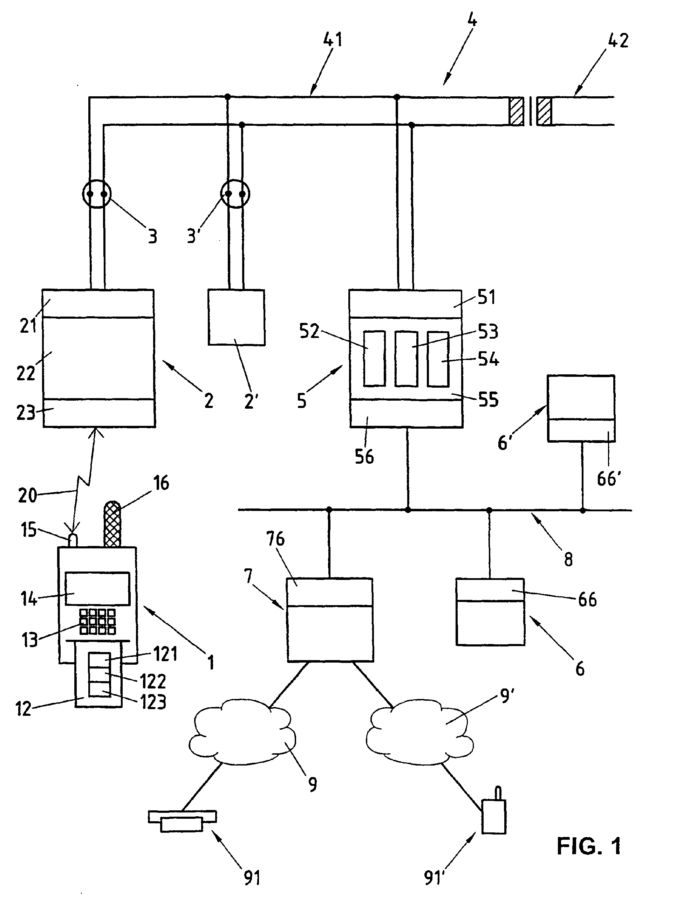

Figur 1 zeigt ein Übersichtsdiagramm mit einem Stromnetz, an welches ein Mobilgerät über ein Verbindungsmodul angeschlossen ist, und einem Verbindungsnetz mit Home Location Register (HLR) und Mobile Switching Centre (MSC), welches Verbindungsnetz über ein Stromnetz Visitor Location Register mit dem genannten Stromnetz verbunden ist.

In der Figur 1 bezieht sich die Bezugsziffer 1 auf ein Mobilgerät, beispielsweise ein Mobilfunktelefon oder ein Laptop- oder Palrntop-Computer jeweils mit geeigneten Kommunikationsmodulen für Mobilnetze 9, beispielsweise GSM-Netze, UMTS-Netze oder andere ähnliche Mobilnetze. Mit dem Mobilgerät 1 ist ein Identifikationsmodul 12 entfernbar verbunden, beispielsweise eine Chipkarte vom "plug-in" oder "full-size" Typ, die über einen Prozessor und einen für diesen Prozessor zugänglichen elektronischen Speicher verfügt.

Wie mit dem Pfeil 20 symbolisch angedeutet wird, kann das Mobilgerät 1 über eine Schnittstelle mit einem Verbindungsmodul 2 verbunden werden. Die Schnittstelle ist beispielsweise eine kontaktbehaftete Schnittstelle, beispielsweise eine Steckverbindung mit Kontaktelementen, die in die Gehäuse des Mobilgeräts 1 und des Verbindungsmoduls 2 integriert sind, oder eine Kabelverbindung, in welcher das Mobilgerät 1 und das Verbindungsmodul 2 über Kabelanschlussbuchsen verfügen und über ein geeignetes Kabel miteinander verbunden werden. In einer Ausführungsvariante ist diese Schnittstelle eine kontaktlose Schnittstelle, beispielsweise eine Infrarotschnittstelle, zum Beispiel eine High Speed Infrared (HSIR) Schnittstelle, eine induktive Schnittstelle, zum Beispiel eine Home RF (Radio Frequency) Schnittstelle oder eine Digital Enhanced Communication Terminal (DECT) Schnittstelle, oder eine hochfrequente Funkschnittstelle, zum Beispiel eine sogenannte "Bluetooth-Schnittstelle". Ein entsprechendes Sende-/Empfangselement 15 ist in der Figur 1 für das Mobilgerät 1 symbolisch dargestellt. Neben den für die betreffende Schnittstelle erforderlichen Hardwareelementen, umfassen das Mobilgerät 1 und das Verbindungsmodul 2 zudem die nötigen Softwareprogramme um über diese Schnittstelle gemäss dem Fachmann bekannten Protokollen zu kommunizieren. Für das Verbindungsmodul 2 ist ein entsprechendes Schnittstellenmodul 23, das die erwähnten Hardwareelemente und Softwareprogramme umfasst, schematisch angedeutet. Die erwähnten Softwareprogramme können im Verbindungsmodul 2 in einem elektronischen Speicher gespeichert und in einem Prozessor ausgeführt werden. Im Mobilgerät 1 können solche Softwareprogramme beispielsweise in einem internen Speicher und Prozessor des Mobilgeräts 1 gespeichert, respektive ausgeführt werden; das Softwareprogramm für die Kommunikation über die betreffende Schnittstelle mit dem Verbindungsmodul 2 kann aber auch im Speicher der Chipkarte 12 gespeichert und im Prozessor dieser Chipkarte 12 ausgeführt werden. In einer weiteren Ausführungsvariante kann die Zuordnung der Speicherung und Ausführung von Softwareprogrammen auf eine Chipkarte, respektive auf das Mobilgerät, zum Beispiel gemäss der vom European Telecommunications Standards Institute (ETSI) definierten Mobile Execution Environment (MEXE) ausgeführt werden, wobei beispielsweise kundenrelevante Daten und Sicherheitsfunktionen sowie Schlüssel und Applets für bestimmte Anwendungen im Speicher der Chipkarte 12 gespeichert werden.

Die Verbindungsmodule 2, 2' verfügen auch über einen Verbindungsstecker, entweder ins Gehäuse des Verbindungsmoduls 2, 2' integriert oder mit einem Kabel mit dem Verbindungsmodul 2, 2' verbunden, mit welchem sie beispielsweise über Steckdosen 3, 3' mit dem Stromnetz 4 verbunden werden können. Wie für das Verbindungsmodul 2 schematisch dargestellt ist, umfassen die Verbindungsmodule 2 jeweils ein Stromleitungskommunikationsmodul 21, mit welchem ein Verbindungsmodul 2 über das genannte Stromnetz 4 mit anderen Einheiten kommunizieren können, die über ein solches Stromleitungskommunikationsmodul an das genannte Stromnetz 4 angeschlossen sind. Ein Stromleitungskommunikationsmodul 21, 51 umfasst dem Fachmann bekannte Hardware- und Softwarekomponenten um digitale Daten, beispielsweise Sprachdaten, Programmdaten, Multimediadaten, Datentelegramme oder andere Dateien beispielsweise gemäss einem Power Line Communication (PLC) Protokoll über Stromnetze 4 zu übertragen, respektive zu empfangen.

Die Verbindungsmodule 2, 2' umfassen jeweils auch ein Transfermodul 22, welches vom Schnittstellenmodul 23 empfangene Daten entgegennimmt und dem Stromleitungskommunikationsmodul 21 zur Übertragung über das Stromnetz 4 übergibt, respektive vom Stromleitungskommunikationsmodul 21 empfangene Daten entgegennimmt und dem Schnittstellenmodul 23 zur Übertragung über die beschriebene Schnittstelle an das Mobilgerät 1 übergibt. Das Transfermodul 22 ist beispielsweise ein programmiertes Softwaremodul, welches beispielsweise im gleichen Prozessor ausgeführt wird wie die Softwareprogramme für das Schnittstellenmodul 23 und/oder für das Stromleitungskommunikationsmodul 21. Je nach den verwendeten Protokollen auf der Schnittstellenseite und der Stromnetzseite übernimmt das Transfermodul 22 gegebenenfalls auch notwendige Protokollkonversionen.

Die Bezugsziffer 5 verweist auf ein Visitor Location Register (VLR) für Stromnetze, das beispielsweise in einem handelsüblichen Kommunikationsserver realisiert ist, welcher über ein oben erwähntes Stromleitungskommunikationsmodul 51 verfügt und mittels diesem an das Stromnetz 4 angeschlossen ist. Obwohl dies nicht dargestellt ist kann das Stromnetz-VLR 5 über das Stromleitungskommunikationsmodul 51 auch an mehrere Stromnetze 4 angeschlossen werden. Im dargestellten Beispiel, empfängt das Stromnetz-VLR 5 über das Stromleitungskommunikationsmodul 51 Daten, die wie oben beschrieben von einem Mobilgerät 1 über ein ans Stromnetz 4 angeschlossenes Verbindungsmodul 2 und über das Stromnetz 4 übertragen werden. In umgekehrter Richtung überträgt das Stromnetz-VLR 5 mittels des Stromleitungskommunikationsmoduls 51 Daten über das Stromnetz 4 und über das Verbindungsmodul 2 an das betreffende mit diesem Verbindungsmodul 2 verbundene Mobilgerät 1. Für die Adressierung des Stromnetz-VLR kann beispielsweise eine generische Adresse verwendet werden, so dass die von Mobilgeräten über ein Stromnetz übertragenen Daten jeweils an das für das betreffende Stromnetz 4 zuständige Stromnetz-VLR 5 übertragen werden, ein Stromnetz-VLR 5 kann beispielsweise jeweils für ein gesamtes (oder für mehr als ein angeschlossenes) Niederspannungsnetz 41 zuständig sein, welches vom Hochspannungsnetz 42 durch einen symbolisch dargestellten Transformator getrennt ist. In umgekehrter Richtung können die am Stromnetz 4 angeschlossenen Verbindungsmodule 2 vom Stromnetz-VLR 5 individuell adressiert werden, wobei beispielsweise jedem Verbindungsmodul 2 seine eigene eindeutige Gerätenummer zugewiesen ist, oder das Verbindungsmodul 2 eine Adresse vom zugehörigen und angeschlossenen Mobilgerät 1 zugewiesen bekommt, welche Adresse beispielsweise von der im ldentifikationsmodul 12 des Mobilgeräts 1 gespeicherte Benutzeridentifizierung 123 oder einer Gerätenummer des Mobilgeräts 1 abgeleitet wird.

Wie beispielsweise im GSM-Standard definiert, sendet ein Mobilgerät 1, beispielsweise bei der Inbetriebnahme des Mobilgeräts 1, die im Identifikationsmodul 12 gespeicherte eindeutige Benutzeridentifizierung 123, zum Beispiel die International Mobile Subscriber Identity (IMSI), an das Visitor Location Register eines besuchten Netzes. Für den Fall, dass das Mobilgerät 1, wie oben beschreiben über eine Schnittstelle mit dem Verbindungsmodul 2 verbunden ist, wird die Benutzeridentifizierung über dieses Verbindungsmodul 2 über das Stromnetz 4 an das Stromnetz-VLR 5 übertragen. In einer Variante kann dabei die Abstrahlung der Meldung mit der Benutzeridentifizierung über die Antenne 16 des Mobilgeräts 1 unterbunden werden, wenn das Mobilgerät 1 an das Verbindungsmodul 2 angeschlossen ist. Es kann auch vorgesehen werden, dass der Benutzer des Mobilgeräts 1 einen entsprechenden Betriebsmodus mittels Bedienungselementen 13 des Mobilgeräts 1 setzen kann.

Die über das Stromnetz 4 übertragene Benutzeridentifizierung wird vom Stromleitungskommunikationsmodul 51 des Stromnetz-VLR 5 empfangen, von einem Verarbeitungsmodul 55 des Stromnetz-VLR 5 entgegengenommen und in einer Tabelle 54 abgespeichert, beispielsweise zusammen mit der Adresse des übertragenden Verbindungsmoduls 2. Das Verarbeitungsmodul 55 ist beispielsweise ein programmiertes Softwaremodul des Stromnetz-VLR 5.

Wie bei einem konventionellen GSM-Location-Update leitet das Stromnetz-VLR 5 Aufenthaltsinformationen an das Home Location Register (HLR) 6 des Benutzers des Mobilgeräts 1, wobei beispielsweise das Verarbeitungsmodul 55 das HLR 6 aus der Benutzeridentifizierung, insbesondere eine IMSI, bestimmen kann. Die Aufenthaltsinformationen umfassen beispielsweise eine Netzwerkadresse oder einen globalen Titel des Stromnetz-VLR 5.

Für die Kommunikation mit den HLR 6, 6' von Benutzern, weiteren nicht dargestellten Stromnetz-VLR und anderen für die mobile Kommunikation wichtigen Netzwerkeinheiten, beispielsweise ein Mobile Switching Centre (MSC) 7, ist das Stromnetz-VLR 5 an ein Verbindungsnetz 8 angeschlossen, mit welchem auch die erwähnten Netzwerkeinheiten verbunden sind. Das Verbindungsnetz 8 ist beispielsweise ein Local oder Wide Area Network (LAN oder WAN), ein dedizierter Backbone, ein Intranet oder das Internet, und umfasst beispielsweise ein Signalisierungssystem Nummer 7 (SS7), wobei alle an das Verbindungsnetz 8 angeschlossenen Netzwerkeinheiten über ein entsprechendes Kommunikationsmodul 56, 66, 66', 76 mit geeigneten Hardware- und Softwareelementen zum Anschluss an und für die Kommunikation über dieses Verbindungsnetz 8 verfügen. Die Kommunikationsmodule 56, 66, 66', 76 verfügen beispielsweise über die Funktionalität, um sogenannte Mobile Application Part (MAP) Meldungen über das Verbindungsnetz 8 auszutauschen. Der Vorteil, MAP-Meldungen, insbesondere über SS7, auszutauschen besteht darin, dass herkömmliche Netzwerkeinheiten wie HLR 6, 6' oder MSC 7 über die entsprechende Funktionalität verfügen und daher nicht angepasst werden müssen. Mit dem HLR 6' in der Figur 1 soll angedeutet werden, dass die Benutzer, die ihre Mobilgeräte 1 mit einem Verbindungsmodul 2 an ein Stromnetz 4 anschliessen, durchaus aus verschiedenen Heimnetzen (Home Public Land Mobile Network, HPLMN) kommen können und entsprechenderweise verschiedenen HLR 6, 6' zugeordnet sind, wobei das Verbindungsnetz 8 das Stromnetz-VLR 5 auch über Landesgrenzen hinweg mit HLR 6, 6' verbinden kann. Obwohl dies nicht dargestellt ist, gilt das gleiche auch für Mobile Switching Stations (MSC) und weitere Stromnetz-VLR, von denen jeweils mehrere, auch über Landesgrenzen hinweg, über das Verbindungsnetz 8 mit einem (oder mehreren) Stromnetz-VLR 5 verbunden werden können.

Auf Anfrage des HLR 6, oder bei jedem Location Update übermittelt das Stromnetz-VLR 5 dem HLR 6 des Benutzers zudem eine sogenannte Roaming-Nummer, die vom HLR 6 beispielsweise dazu verwendet werden kann, beispielsweise Anrufe an das ans Stromnetz 4 angeschlossene Mobilgerät 1 über das Stromnetz-VLR 5 weiterzuleiten. Die Roaming-Nummer kann beispielsweise vom oben erwähnten Verarbeitungsmodul 55 bestimmt und für den betreffenden Benutzer in die erwähnte Tabelle 54 eingetragen werden. Die Roaming-Nummer umfasst beispielsweise auch Adressinformationen, die das Verbindungsmodul 2 betreffen, über welches das Mobilgerät 1 ans Stromnetz 4 angeschlossen ist.

Wie in der Figur 1 dargestellt wird, umfasst das Stromnetz-VLR 5 zudem ein Gateway-Modul 53, welches Anrufe an betreffende mit dem Stromnetz 4 verbundene Mobilgeräte 1 weiterleiten kann, die von einem MSC 7 von anrufenden Endgeräten 91, 91' oder von einem anderen (nicht dargestellten) Stromnetz-VLR von mit einem Stromnetz verbundenen Mobilgeräten entgegengenommen und auf Grund der im HLR 6 gespeicherten Aufenthaltsinformationen des betreffenden Benutzers an das Stromnetz-VLR 5 weitergeleitet wurden. Für die umgekehrte Richtung verfügt das Gateway-Modul 53 über die notwendige Funktionalität, um Anrufe, auf Grund der im HLR des betreffenden angerufenen Benutzers gespeicherten Aufenthaltsinformationen, von mit dem Stromnetz 4 verbundenen Mobilgeräten 1 zur Weiterleitung an ein betreffendes MSC 7 oder ein weiteres nicht dargestelltes Stromnetz-VLR weiterzuleiten. Im MSC 7 werden die Anrufe an das betreffende angerufene Endgerät 91 in einem Festnetz 9, zum Beispiel das öffentliche geschaltete Telefonnetz (Public Switched Telephone Network, PSTN) 9, respektive an das angerufene Mobilgerät 91' in einem Mobilnetz 91 weitergeleitet, während in einem weiteren nicht dargestellten Stromnetz-VLR diese Anrufe an das betreffende angerufene mit einem Stromnetz verbundene Mobilgerät weitergeleitet werden. Das Gateway-Modul 53 ist beispielsweise ein programmiertes Softwaremodul, welches beispielsweise auch notwendige Protokollkonversionen zwischen den verwendeten Protokollen im Stromnetz 4 und im Verbindungsnetz 8 ausführt und ankommende oder ausgehende Anrufe für den Benutzer eines ans Stromnetz 4 angeschlossenen Mobilgeräts 1, transparent über das Stromnetz-VLR 5 abwickelt. An dieser Stelle sollte klargestellt werden, dass insbesondere dieses Gateway-Modul 53 eine Funktionalität aufweist, die in herkömmlichen VLR, wie sie in Mobilnetzen verwendet werden, nicht vorhanden ist, dies betrifft insbesondere auf Funktionen zu, die herkömmlicherweise in einem MSC ausgeführt werden.

In einer Ausführungsvariante verfügt das Stromnetz-VLR 5 zudem über ein Verrechnungsmodul 52, beispielsweise ein programmiertes Softwaremodul, welches zum Beispiel die Kosten, die bei der Kommunikation über das Stromnetz 4, über das Stromnetz-VLR 5 und über das Verbindungsnetz 8 entstehen, einem betreffenden Benutzer verrechnen kann. Die Verrechnung kann zum Beispiel vom Verrechnungsmodul 52 mittels des Stromleitungskommunikationsmoduls 51 direkt über das Stromnetz 4 und über das Verbindungsmodul 2 dem angeschlossenen Mobilgerät 1 verrechnet werden, beispielsweise indem der zu verrechnende Geldbetragswert von einem auf der mit dem Mobilgerät 1 entfernbar verbundenen Chipkarte 12 gespeicherten vorausbezahlten Geldbetrag 122 subtrahiert wird. Diese direkte Verrechnung kann beispielsweise so erfolgen, dass die Verrechnungsdaten vom Verrechnungsmodul 52 in speziellen Kurzmeldungen, beispielsweise SMS- (Short Message Services), USSD-Meldungen (Unstructured Supplementary Services Data) oder an das Stromnetz angepasste Kurzmeldungen, dem Stromleitungskommunikationsmodul 51 zur Übertragung an das betreffende Mobilgerät über das Stromnetz 4 übergeben werden. Wie oben beschrieben wurde, werden die übertragenen Kurzmeldungen mit den Verrechnungsdaten im Mobilgerät 1 entgegengenommen und können beispielsweise durch eine auf der Chipkarte 12 gespeicherte spezielle Programmanwendung 121 entgegengenommen und wie erwähnt dem Konto 122 mit dem vorausbezahlten Geldbetrag belastet werden. Die Abwicklung dieses direkten Verrechnungsauftrags zwischen dem Verrechnungsmodul 52 des Stromnetz-VLR 5 und der speziellen Programmanwendung 121 auf der Chipkarte 12 im Mobilgerät 1 wird beispielsweise gemäss dem in EP 0 689 368 beschriebenen SICAP-Verfahren ausgeführt. In einer alternativen oder zusätzlichen Variante übermittelt das Verrechnungsmodul 52 die Verrechnungsdaten beispielsweise über das Verbindungsnetz 8 an eine nicht dargestellte Clearingstelle, beispielsweise mittels sogenannten Call Detail Records (CDR), welche Clearingstelle die zu verrechnenden Kosten direkt dem betreffenden Benutzer verrechnet, beispielsweise mittels einer durch die Post zugestellte Rechnung oder durch Belastung eines Bankkontos des betreffenden Benutzers, oder welche Clearingstelle die zu verrechnenden Kosten zur Weiterverarbeitung dem Heimnetzwerkbetreiber des betreffenden Benutzers übermittelt. Der Fachmann wird verstehen, dass es weitere Möglichkeiten gibt, die erwähnten Kosten dem Benutzer zu verrechnen, insbesondere können die Kosten auch in der Chipkarte 12 erfasst und verrechnet werden, wie dies beispielsweise in der nicht veröffentlichten Patentanmeldung PCT/CH97/00472 im Namen der Anmelderin beschrieben wurde, wobei die Dauer eines Anrufs durch eine in der Chipkarte 12 integrierte Zeitmessvorrichtung ermittelt wird und der zu verrechnende Betrag in Abhängigkeit von der ermittelten Anrufdauer und von mindestens einer in der Chipkarte 12 gespeicherten Tariftabelle bestimmt wird. Der in dieser letzten Variante beschriebene zu verrechnende Betrag kann beispielsweise direkt auf einem vorausbezahlten Konto auf der Chipkarte 12 abgebucht werden oder mittels CDR an eine Clearingstelle zur Weiterverarbeitung übermittelt werden.

An dieser Stelle sollte auch erwähnt werden, dass es durchaus sinnvoll ist, die Datenübertragung über das Stromnetz 4 gesichert auszuführen. Zu diesem Zweck können beispielsweise die Stromleitungskommunikationsmodule 21, 51 mit Sicherheitsfunktionen ausgestattet werden, die zum Beispiel gemäss einem Point-to-Point (PTP), gemäss dem Trusted Third Party-Verfahren (TTP) oder gemäss einem anderen Verschlüsselungsverfahren funktionieren. Die Sicherheitsfunktionen können allerdings auch auf einer höheren Ebene, beispielsweise im Mobilgerät 1 und im Stromnetz-VLR 5 ausgeführt werden.

In einer Ausführungsvariante sind die bereits beschriebenen Module 21, 22, 23 des Verbindungsmoduls 2 mit einem nicht dargestellten Lademodul kombiniert, welches dem Fachmann bekannte Hardwareelemente umfasst, um Energiespeicher zur Betreibung eines Mobilgeräts am genannten Stromnetz 4 aufzuladen.

Obwohl dies im Detail nicht beschrieben wurde, kann es in gewissen Situationen und Anwendungen durchaus auch sinnvoll sein, mit ans Stromnetz 4 angeschlossenen Mobilgeräten 1 direkt über dieses Stromnetz 4 mit anderen ans Stromnetz 4 angeschlossenen Mobilgeräten und/oder auch fixen Endgeräten zu kommunizieren. Dabei können die Mobilgeräte beispielsweise am gleichen Stromnetz 4 angeschlossen sein oder sie können an verschiedenen Stromnetzen angeschlossen sein und über verschiedene Stromnetz-VLR 5 und das Verbindungsnetz 8 und unter Zuhilfenahme von in den HLR 6, 6' abgespeicherten Informationen, beispielsweise Aufenthaltsinformationen eines betreffenden angerufenen Benutzers, miteinander kommunizieren, wie dies bereits beschrieben wurde. Insbesondere in Gebieten, die nicht im Funkbereich eines Mobilnetzes liegen, und/oder in Situationen in welchen ein Betreiber ein konkurrierendes Kommunikationsnetz für Mobilgeräte betreiben möchte ohne die nötige Mobilnetzinfrastruktur in weniger dicht besiedelten Gebieten aufbauen zu wollen, kann es für einen Betreiber interessant sein ein Kommunikationssystem für Stromnetze aufzubauen wie es hier beschrieben wurde. Dabei sollte festgehalten werden, dass die beschriebenen HLR 6, 6' nicht unbedingt Teil eines Mobilnetzes zu sein brauchen, sondern, dass sie Teil eines Stromnetz-Kommunikationssystems sein können, wobei mehrere HLR und Stromnetz-VLR über ein oben beschriebenes Verbindungsnetz 8 verbunden sind und ähnlich wie in einem herkömmlichen Mobilnetz betrieben werden können. Das beschriebene Kommunikationssystem kann also durchaus auch als Stromnetz-Gesamtkommunikationssystem aufgebaut werden, über welches Mobilgeräte mit beschriebenen Verbindungsmodulen und/oder Kommunikationsendgeräte mit integrierter Verbindungsmodulfunktionalität kommunizieren können. Über eine Vermittlungsstelle, beispielsweise ein MSC 7, kann ein solches Stromnetz-Gesamtkommunikationssystem wie beschrieben mit dem öffentlichen geschalteten Telefonnetz 9, 9' verbunden werden.

Neben dem Betrieb und/oder der Installierung von Kommunikationssystemen, wie sie in der vorliegenden Erfindung beschrieben wurden, kann es insbesondere auch interessant sein, Stromnetz-VLR 5 an Betreiber von Kommunikationsnetzwerken und/oder Stromnetzen zu verkaufen oder zu vermieten oder herkömmliche VLR so zu erweitern, dass sie wie beschrieben als Stromnetz-VLR eingesetzt werden können. Interessierten Kunden, vor allem solchen, die sich in den eingangs erwähnten Gebieten und/oder Lokalitäten aufhalten und dort von ihren Mobilgeräten Gebrauch machen wollen, können vor allem die beschriebenen Verbindungsmodule 2 verkauft oder vermietet werden.

## Patentansprüche

1. Kommunikationssystem, welches eine Vielzahl von Mobilgeräten (1, 91') umfasst, mit denen jeweils ein Identifikationsmodul (12) verbunden ist, in welchen Identifikationsmodulen (12) jeweils eine Benutzeridentifizierung (123) des Benutzers des betreffenden Mobilgeräts (1) gespeichert ist, welches Kommunikationssystem mindestens ein Visitor Location Register (5) umfasst, an welches Visitor Location Register (5) Benutzeridentifizierungen (123) der Benutzer jeweils mittels eines der Mobilgeräte (1) übertragen und dort gespeichert werden, und welches Kommunikationssystem mindestens ein Home Location Register (6) umfasst, in welchem die Benutzeridentfizierungen jeweils mit einer Rufnummer und weiteren Benutzerdaten verknüpft sind, welche Benutzerdaten Aufenthaltsinformationen eines betreffenden Benutzers umfassen, wobei die Aufenthaltsinformationen von einem Visitor Location Register (5) an das Home Location Register (6) eines Benutzers weitergeleitet werden, **dadurch gekennzeichnet,**
**dass** es Verbindungsmodule (2, 2') umfasst, mittels welchen Verbindungsmodulen (2, 2') jeweils eines der Mobilgeräte (1) durch einen Benutzer an ein Niederspannungsnetz (41) anschliessbar ist, wobei die Verbindungsmodule (2, 2') zum Anschluss an das Niederspannungsnetz (41) jeweils einen Verbindungsstecker umfassen, mittels welchen Verbindungssteckern die Verbindungsmodule (2, 2') jeweils über Steckdosen (3, 3') des Niederspannungsnetzes (41) mit dem Niederspannungsnetz (41) verbindbar sind, und wobei die Verbindungsmodule (2, 2') zur Verbindung mit dem betreffenden Mobilgerät (1) ein Schnittstellenmodul umfassen, und
**dass** die Verbindungsmodule (2, 2`) jeweils ein geeignetes Stromleitungskommunikationsmodul (21) umfassen, mittels welchem das betreffende Mobilgerät (1) über das Niederspannungsnetz (41) mit anderen Einheiten (5) kommunizieren kann, die über ein Stromleitungskommunikationsmodui (51) an das Niederspannungsnetz (41) angeschlossen sind.

2. Kommunikationssystem gemäss vorhergehendem Anspruch, **dadurch gekennzeichnet, dass** es mindestens ein Visitor Location Register (5) umfasst, welches über das Stromleitungskommunikationsmodul (51) mit mindestens einem Niederspannungsnetz (41) verbunden ist, und dass Benutzeridentifizierungen (123) von betreffenden Mobilgeräten (1) über das Niederspannungsnetz (41) an dieses Stromnetz Visitor Location Register (5) übertragbar sind.

3. Kommunikationssystem gemäss vorhergehendem Anspruch, **dadurch gekennzeichnet, dass** das Stromnetz Visitor Location Register (5) eine Tabelle (54) umfasst, in welcher Adressinformationen betreffend Verbindungsmodule (2, 2') mit zugehörigen Benutzeridentifizierungen verknüpft und gespeichert sind.

4. Kommunikationssystem gemäss vorhergehendem Anspruch, **dadurch gekennzeichnet, dass** das Stromnetz Visitor Location Register (5) dem Home Location Register (6, 6') eines Benutzers eine Roaming-Nummer betreffend das Möbilgerät (1) dieses Benutzers übermittelt, und dass in der Tabelle (54) zusätzlich die Roaming-Nummem mit zugehörigen Benutzeridentifizierungen verknüpft und gespeichert sind.

5. Kommunikationssystem gemäss vorhergehendem Anspruch, **dadurch gekennzeichnet, dass** mindestens gewisse der Roaming-Nummem Adressinformationen betreffend ein Verbindungsmodul (2, 2') umfassen.

6. Kommunikationssystem gemäss einem der Ansprüche 2 bis 5, **dadurch gekennzeichnet, dass** mindestens gewisse der
Aufenthaltsinformationen Adressinformationen betreffend das Stromnetz Visitor Location Register (5) umfassen.

7. Kommunikationssystem gemäss einem der Ansprüche 2 bis 6, **dadurch gekennzeichnet, dass** das Kommunikationssystem ein Verbindungsnetz (8) umfasst, über welches das Stromnetz Visitor Location Register (5) mit mindestens einem Home Location Register (6) und/oder mindestens einem Mobile Switching Centre (7) kommunizieren kann.

8. Kommunikationssystem gemäss vorhergehendem Anspruch, **dadurch gekennzeichnet, dass** das Verbindungsnetz (8) ein SS7-Signalisierungssystem umfasst oder das Internet oder ein Intranet ist.

9. Kommunikationssystem gemäss einem der Ansprüche 7 bis 8, **dadurch gekennzeichnet, dass** das Stromnetz Visitor Location Register (5) so eingerichtet ist, dass es mittels MAP-Meldungen mit anderen an das Verbindungsnetz (8) angeschlossenen Netzwerkeinheiten (6, 6', 7) kommunizieren kann.

10. Kommunikationssystem gemäss einem der Ansprüche 7 bis 9, **dadurch gekennzeichnet, dass** das Stromnetz Visitor Location Register (5) ein Gateway-Modul (53) umfasst, welches Gateway-Modul (53) Anrufe von Endgeräten, welche Anrufe über das Verbindungsnetz (8) an das Stromnetz Visitor Location Register (5) weitergeleitet wurden, an betreffende Mobilgeräte (1) weiterleiten kann, und welches Gateway-Modul (53) Anrufe von betreffenden Mobilgeräten (1) über das Verbindungsnetz (8) an eine betreffende Netzwerkeinheit, insbesondere ein zweites Stromnetz Visitor Location Register, zur Weiterleitung an ein angerufenes Endgerät weiterleiten kann.

11. Kommunikationssystem gemäss einem der Ansprüche 2 bis 10, **dadurch gekennzeichnet, dass** das Stromnetz Visitor Location Register (5) ein Gateway-Modul (53) umfasst, welches Gateway-Modul (53) Anrufe von Endgeräten (91, 91') an betreffende Mobilgeräte (1) weiterleiten kann, welche Anrufe von einem Mobile Switching Centre (7) entgegengenommen und an das Stromnetz Visitor Location Register (5) weitergeleitet wurden, und welches Gateway-Modul (53) Anrufe von betreffenden Mobilgeräten (1) zur Weiterleitung an ein angerufenes Endgerät (91, 91') an ein betreffendes Mobile Switching Centre (7) weiterleiten kann.

12. Kommunikationssystem gemäss einem der Ansprüche 2 bis 11, **dadurch gekennzeichnet, dass** das Stromnetz Visitor Location Register (5) ein Verrechnungsmodul (52) umfasst, welches Dienste, die für ein betreffendes Mobilgerät (1) ausgeführt wurden, erfassen und verrechnen kann.

13. Kommunikationssystem gemäss vorhergehendem Anspruch, **dadurch gekennzeichnet, dass** das Verrechnungsmodul (52) erfasste Dienste einem betreffenden Mobilgerät (1) direkt über das Niederspannungsnetz (41) verrechnen kann.

14. Kommunikationssystem gemäss einem der vorhergehenden Ansprüche, **dadurch gekennzeichnet, dass** das Schnittstellenmodul (23) eine kontaktbehaftete Schnittstelle, eine kontaktlose Infrarotschnittstelle, eine kontaktlose induktive Schnittstelle und/oder eine kontaktlose hochfrequente Funkschnittstetfe umfasst.

15. Kommunikationssystem gemäss einem der vorhergehenden Ansprüche, **dadurch gekennzeichnet, dass** die Verbindungsmodule (2, 2') Lademodule umfassen, mittels welchen Energiespeicher zur Betreibung der Mobilgeräte (1) am Niederspannungsnetz (41) aufladbar sind.

16. Kommunikationsverfahren, in welchem Benutzeridentifizierungen (123) von Benutzern einer Vielzahl von Mobilgeräten (1, 91') jeweils in einem ldentifikationsmodul (12) gespeichert werden, welche ldentifikationsmodule (12) mit den Mobilgeräten (1, 91,) verbunden sind, in welchem Kommunikationsverfahren die Benutzeridentifizierungen (123) der Benutzer jeweils mittels eines der Mobilgeräte an ein Visitor Location Register (5) übertragen und dort gespeichert werden, und in welchem Kommunikationsverfahren die Benutzeridentifizierungen jeweils mit einer Rufnummer und weiteren Benutzerdaten verknüpft und in einem Home Location Register (6) gespeichert werden, wobei die Benutzerdaten Aufenthaltsinformationen eines betreffenden Benutzers umfassen, und wobei die Aufenthaitsinformationen von einem Visitor Location Register (5) an das Home Location Register (6) eines Benutzers weitergeleitet werden, **dadurch gekennzeichnet,**
**dass** mindestens gewisse der Mobilgeräte (1) von den Benutzern jeweils mittels eines Verbindungsmoduls (2) an ein Niederspannungsnetz (41) angeschlossen werden, wobei das betreffende Verbindungsmodul (2, 2') jeweils mittels eines Verbindungssteckers des betreffenden Verbindungsmoduls (2, 2') über Steckdosen (3, 3') des Niederspannungsnetzes (41) an das Niederspannungsnetz (41) angeschlossen wird, und wobei das betreffende Verbindungsmodul (2, 2') mittels eines Schnittstellenmoduls (23) des betreffenden Verbindungsmoduls (2, 2') mit dem betreffenden Mobilgerät (1) verbunden wird, und
**dass** das betreffende Mobilgerät (1) mittels eines geeigneten Stromleitungskommunikationsmoduls (21) des betreffenden Verbindungsmoduls (2, 2') über das Niederspannungsnetz (41) mit anderen Einheiten (5) kommuniziert, die über ein Stromleitungskommunikationsmodul (51) an das Niederspannungsnetz (41) angeschlossen sind.

17. Kommunikationsverfahren gemäss vorhergehendem Anspruch, **dadurch gekennzeichnet, dass** mindestens ein Visitor Location Register (5) über ein Stroml'eitungskommunikationsmodul (51) mit mindestens einem Niederspannungsnetz (41) verbunden wird, und dass die Benutzeridentifizierungen (123) von betreffenden Mobilgeräten (1) über das Niederspannungsnetz (41) an dieses Stromnetz Visitor Location Register (5) übertragen werden.

18. Kommunikationsverfahren gemäss vorhergehendem Anspruch, **dadurch gekennzeichnet, dass** Adressinformationen betreffend Verbindungsmodulen (2, 2') mit zugehörigen Benutzeridentifizierungen verknüpft und in einer Tabelle, (54) des Stromnetz Visitor Location Registers (5) gespeichert werden.

19. Kommunikationsverfahren gemäss vorhergehendem Anspruch, **dadurch gekennzeichnet, dass** das Stromnetz Visitor Location Register (5) dem Home Location Register (6, 6') eines Benutzers eine Roaming-Nummer betreffend das Mobilgerät (1) dieses Benutzers übermittelt, und dass in der Tabelle (54) zusätzlich Roaming-Nummern mit zugehörigen Benutzeridentifizierungen verknüpft und gespeichert werden.

20. Kommunikationsverfahren gemäss vorhergehendem Anspruch, **dadurch gekennzeichnet, dass** mindestens gewisse der Roaming-Nummern Adressinformationen betreffend ein Verbindungsmodul (2, 2') umfassen.

21. Kommunikationsverfahren gemäss einem der Ansprüche 17 bis 20, **dadurch gekennzeichnet, dass** mindestens gewisse der Aufenthaltsinformationen Adressinformationen betreffend ein Stromnetz Visitor Location Register (5) umfassen.

22. Kommunikationsverfahren gemäss einem der Ansprüche 17 bis 21, **dadurch gekennzeichnet, dass** das Stromnetz Visitor Location Register (5) über ein Verbindungsnetz (8) mit mindestens einem Home Location Register (6) und/oder mindestens einem Mobile Switching Centre (7) kommuniziert.

23. Kommunikationsverfahren gemäss vorhergehendem Anspruch, **dadurch gekennzeichnet, dass** das Verbindungsnetz (8) ein SS7-Signalisierungssystem umfasst oder das Internet oder ein Intranet ist.

24. Kommunikationsverfahren gemäss einem der Ansprüche 22 bis 23, **dadurch gekennzeichnet, dass** das Stromnetz Visitor Location Register (5) mittels MAP-Meldungen mit anderen ans Verbindungsnetz (8) angeschlossenen Netzwerkeinheiten (6, 6', 7) kommuniziert.

25. Kommunikationsverfahren gemäss einem der Ansprüche 22 bis 24, **dadurch gekennzeichnet, dass** das Stromnetz Visitor Location Register (5) Anrufe von Endgeräten, welche Anrufe über das Verbindungsnetz (8) an das Stromnetz Visitor Location Register (5) weitergeleitet wurden, mittels eines Gateway-Moduls (53) an betreffende mindestens gewisse Mobilgeräte (1) weiterleitet, und dass das Stromnetz Visitor Location Register (5) mittels dieses Gateway-Moduls (53) Anrufe von den mindestens gewissen Mobilgeräten (1) über das Verbindungsnetz (8) an eine betreffende Netzwerkeinheit, insbesondere ein zweites Stromnetz Visitor Location Register, zur Weiterleitung an ein angerufenes Endgerät weiterleitet.

26. Kommunikationsverfahren gemäss einem der Ansprüche 17 bis 25, **dadurch gekennzeichnet, dass** das Stromnetz Visitor Location Register (5) Anrufe, die von einem Mobile Switching Centre (7) von anrufenden Endgeräten (91, 91') entgegengenommen und an das Stromnetz Visitor Location Register (5) weitergeleitet wurden, mittels eines Gateway-Moduls (53) an betreffende mindestens gewisse Mobilgeräte (1) weiterleitet, respektive Anrufe von mindestens gewissen Mobilgeräten (1) zur Weiterleitung an ein angerufenes Endgerät (91, 91') mittels dieses Gateway-Moduls (53) an ein betreffendes Mobile Switching Centre (7) weiterleitet.

27. Kommunikationsverfahren gemäss einem der Ansprüche 17 bis 26, **dadurch gekennzeichnet, dass** das Stromnetz Visitor Location Register (5) Dienste, die für ein betreffendes mindestens gewisses Mobilgerät (1) ausgeführt wurden, mittels eines Verrechnungsmoduls (52) erfasst und verrechnet.

28. Kommunikationsverfahren gemäss einem der Ansprüche 16 bis 27, **dadurch gekennzeichnet, dass** das Verrechnungsmodul (52) erfasste Dienste einem betreffenden mindestens gewissen Mobilgerät (1) direkt über das Niederspannungsnetz (41) verrechnet.

29. Kommunikationsverfahren gemäss einem der Ansprüche 16 bis 28, **dadurch gekennzeichnet, dass** das Schnittstellenmodul (23) eine kontaktbehaftete Schnittstelle, eine kontaktlose Infrarotschnittstelle, eine kontaktlose induktive Schnittstelle und/oder eine kontaktlose hochfrequente Funkschnittstelle umfasst.

30. Kommunikationsverfahren gemäss einem der Ansprüche 16 bis 29, **dadurch gekennzeichnet, dass** die Verbindungsmodule (2, 2') Energiespeicher zur Betreibung der Mobilgeräte (1) mittels Lademodulen am Niederspannungsnetz (41) aufladen.

31. Verbindungsmodul (2, 2') für ein Kommunikationssystem gemäss einem der Ansprüche 1 bis 15,
welches Verbindungsmodul (2, 2') so eingerichtet ist, dass Benutzer von Mobilgeräten (1) mindestens gewisse der Mobilgeräte (1) jeweils mittels des Verbindungsmoduls (2, 2') an ein Niederspannungsnetz (41) anschliessen können, wobei das Verbindungsmodul (2, 2') zum Anschluss an das Niederspannungsnetz (41) einen Verbindungsstecker umfasst, mittels welchen Verbindungssteckers das Verbindungsmodul (2, 2') über Steckdosen (3, 3') des Niederspannungsnetzes (41) mit dem Niederspannungsnetz (41) verbindbar ist, und wobei das Verbindungsmodul (2, 2') zur Verbindung mit einem betreffenden Mobilgerät (1) ein Schnittstellenmodul (23) umfasst, und
welches Verbindungsmodul (2, 2') ein geeignetes Stromleitungskommunikationsmodul (21) umfasst, mittels welchem das betreffende Mobilgerät (1) über das Niederspannungsnetz (41) mit anderen Einheiten (5) kommunizieren kann, die über ein Stromleitungskommunikationsmodul (51) an das Niederspannungsnetz (41) angeschlossen sind.

32. Verbindungsmodul (2, 2') gemäss vorhergehendem Anspruch, **dadurch gekennzeichnet, dass** es Adressinformationen gespeichert hat, durch welche es im Niederspannungsnetz (41) adressierbar ist.

33. Verbindungsmodul (2, 2') gemäss einem der Ansprüche 31 bis 32, **dadurch gekennzeichnet, dass** das Schnittstellenmodul (23) eine kontaktbehaftete Schnittstelle, eine kontaktlose lnfrarotschnittstelle, eine kontaktlose induktive Schnittstelle und/oder eine kontaktlose hochfrequente Funkschnittstelle umfasst.

34. Verbindungsmodul (2, 2') gemäss einem der Ansprüche 31 bis 33, **dadurch gekennzeichnet, dass** es ein Lademodul umfasst, mittels welchem ein Energiespeicher zur Betreibung eines Mobilgeräts (1) am Niederspannungsnetz (41) aufladbar ist.

35. Verbindungsmodul (2, 2') gemäss einem der Ansprüche 31 bis 34, **dadurch gekennzeichnet, dass** die mindestens gewissen Mobilgeräte (1) jeweils ein Mobilfunktelefon umfassen.

## Claims

1. A communications system, which comprises a multiplicity of mobile devices (1, 91'), to which an identification module (12) is connected in each case, in which identification modules (12) a user identification (123) of the user of the respective mobile device (1) is stored in each case, which communications system comprises at least one visitor location register (5), to which visitor location register (5) user identifications (123) of the users are transmitted each by means of one of the mobile devices (1) and are stored there, and which communications system comprises at least one home location register (6), in which the user identifications are each linked to a call number and to further user data, which user data comprise location information for a respective user, the location information being transmitted from a visitor location register (5) to the home location register (6) of a user, wherein
it comprises connecting modules (2, 2'), by means of which connecting modules (2, 2') one of the mobile devices in each case is connectible by a user to a lower voltage grid (41), the connecting modules (2, 2') each comprising a connecting plug for connection to the low voltage grid (41), by means of which connecting plugs the connecting modules (2, 2') are each connectible to the low voltage grid (41) via outlets (3, 3') of the low voltage grid (41), and the connecting modules (2, 2') comprising an interface module for connection to the respective mobile device (1), and
the connecting modules (2, 2') each comprise a suitable power line communications module (21) by means of which the respective mobile device (1) is able to communicate via the low voltage grid (41) with other units (5) which are connected to the low voltage grid (41) via a power line communications module (51).

2. The communications system according to the preceding claim, wherein it comprises at least one visitor location register (5) which is connected to at least one low voltage grid (41) via the power line communications module (51), and wherein user identifications (123) are transmittable to this power supply network visitor location register (5) via the low voltage grid (41) by respective mobile devices (1).

3. The communications system according to the preceding claim, wherein the power supply network visitor location register (5) comprises a table (54) in which address data relating to connecting modules (2, 2') are linked to associated user identifications and are stored.

4. The communications system according to the preceding claim, wherein the power supply network visitor location register (5) transmits to the home location register (6, 6') of a user a roaming number relating to the mobile device (1) of this user, and wherein the roaming numbers are additionally linked in the table (54) with associated user identifications and are stored.

5. The communications system according to the preceding claim, wherein at least certain of the roaming numbers comprise address data relating to a connecting module (2, 2').

6. The communications system according to one of the claims 2 to 5, wherein at least certain pieces of the location information comprise address data relating to the power supply network visitor location register (5).

7. The communications system according to one of the claims 2 to 6, wherein the communications system comprises a connecting network (8) via which the power supply network visitor location register (5) is able to communicate with at least one home location register (6) and/or at least one mobile switching center (7).

8. The communications system according to the preceding claim, wherein the connecting network (8) comprises a SS7 signalling system, or is the Internet or an intranet.

9. The communications system according to one of the claims 7 to 8, wherein the power supply network visitor location register (5) is set up in such a way that it is able to communicate, by means of MAP messages, with other network units (6, 6', 7) connected to the connecting network (8).

10. The communications system according to one of the claims 7 to 9, wherein the power supply network visitor location register (5) comprises a gateway module (53), which gateway module (53) is able to pass on calls from terminals to respective mobile devices (1), which calls have been passed on via the connecting network (8) to the power supply network visitor location register (5), and which gateway module (53) is able to pass on calls from respective mobile devices (1) via the connecting network (8) to a respective network unit, in particular a second power supply network visitor location register, for further transmission to a called terminal.

11. The communications system according to one of the claims 2 to 10, wherein the power supply network visitor location register (5) comprises a gateway module (53), which gateway module (53) is able to pass on calls from terminals (91, 91') to respective mobile devices (1), which calls have been received from a mobile switching center (7) and have been passed on to the power supply network visitor location register (5), and which gateway module (53) is able to pass on to a respective mobile switching center (7) calls from respective mobile devices (1) for further transmission to a called terminal (91, 91').

12. The communications system according to one of the claims 2 to 11, wherein the power supply network visitor location register (5) comprises a billing module (52) which is able to record and bill for services that have been carried out for a respective mobile device (1).

13. The communications system according to the preceding claim, wherein the billing module (52) is able to bill recorded services to a respective mobile device (1) directly via the low voltage grid (41).

14. The communications system according to one of the preceding claims, wherein the interface module (23) comprises an interface with contacts, a contactless infrared interface, a contactless inductive interface and/or a contactless high frequency radio interface.

15. The communications system according to one of the preceding claims, wherein the connecting modules (2,2') comprise charging modules by means of which energy storage devices for operation of the mobile devices (1) are chargeable on the low voltage grid (41).

16. A communications method in which user identifications (123) of users of a multiplicity of mobile devices (1, 91') are each stored in an identification module (12), which identification modules (12) are connected to the mobile devices (1, 91), in which communications method the user identifications (123) of the users are each transmitted by means of one of the mobile device (1) to a visitor location register (5) and are stored there, and in which communications method the user identifications are each linked to a call number and to further user data and are stored in a home location register (6), the user data comprising location information for a respective user, and the location information being transmitted from a visitor location register (5) to the home location register (6) of a user, wherein
at least certain of the mobile devices (1) are connected by the users to a low voltage grid (41) in each case by means of a connecting module (2), the respective connecting module (2, 2') being connected to the low voltage network (41) in each case by means of a connecting plug of the respective connecting module (2, 2') via outlets (3, 3') of the low voltage network (41), and the respective connecting module (2, 2') being connected to the respective mobile device (1) by means of an interface module (23) of the respective connecting module (2, 2'), and
the respective mobile device (1), by means of a suitable power line communications module (21) of the respective connecting module (2, 2') communicates, via the low voltage network (41), with other units (5), which are connected to the low voltage grid (41) via a power line communications module (51).

17. The communications method according to the preceding claim, wherein at least one visitor location register (5) is connected to at least one low voltage grid (41) via a power line communications module (51), and the user identifications (123) of respective mobile devices (1) are transmitted to this power supply network visitor location register (5) via the low voltage grid (41).

18. The communications method according to the preceding claim, wherein address data relating to connecting modules (2, 2') are linked with associated user identifications and are stored in a table (54) of the power supply network visitor location register (5).

19. The communications method according to the preceding claim, wherein the power supply network visitor location register (5) transmits to the home location register (6, 6') of a user a roaming number relating to the mobile device (1) of this user, and wherein roaming numbers are additionally linked in the table (54) with associated user identifications and are stored.

20. The communications method according to the preceding claim, wherein at least certain of the roaming numbers comprise address data relating to a connecting module (2, 2').

21. The communications method according to one of the claims 17 to 20, wherein at least certain pieces of the location information comprise address data relating to a power supply network visitor location register (5).

22. The communications method according to one of the claims 17 to 21, wherein the power supply network visitor location register (5) communicates, via a connecting network (8), with at least one home location register (6) and/or at least one mobile switching center (7).

23. The communications method according to the preceding claim, wherein the connecting network (8) comprises a SS7 signalling system or is the Internet or an intranet.

24. The communications method according to one of the claims 22 to 23, wherein the power supply network visitor location register (5) communicates by means of MAP messages with other network units (6, 6', 7) connected to the connecting network (8).

25. The communications method according to one of the claims 22 to 24, wherein the power supply network visitor location register (5) passes on calls from terminals, by means of a gateway module (53) to respective at least certain mobile devices (1), which calls have been passed on via the connecting network (8) to the power supply network visitor location register (5), and wherein the power supply network visitor location register (5) passes on, by means of this gateway module (53), calls from the at least certain mobile devices (1) via the connecting network (8) to a respective network unit, in particular a second power supply network visitor location register, for further transmission to a called terminal.

26. The communications method according to one of the claims 17 to 25, wherein the power supply network visitor location register (5) passes on, to respective at least certain mobile devices (1), by means of a gateway module (53), calls, which have been received by a mobile switching center (7) from calling terminals (91, 91') and have been passed on to the power supply network visitor location register (5), or respectively passes on to a respective mobile switching center (7), by means of this gateway module (53), calls from at least certain mobile devices (1) for further transmission to a called terminal (91, 91').

27. The communications method according to one of the claims 17 to 26, wherein the power supply network visitor location register (5) records and bills for services, which have been carried out for a respective at least certain mobile device (1), by means of a billing module (52).

28. The communications method according to one of the claims 16 to 27, wherein the billing module (52) bills recorded services to a respective at least certain mobile device (1) directly via the low voltage grid (41).

29. The communications method according to one of the claims 16 to 28, wherein the interface module (23) comprises an interface with contacts, a contactless infrared interface, a contactless inductive interface and/or a contactless high frequency radio interface.

30. The communications method according to one of the claims 16 to 29, wherein, by means of charging modules, the connecting modules (2, 2') charge on the low voltage grid (41) energy storage devices for operation of the mobile devices (1).

31. A connecting module (2, 2') for a communications system according to one of the claims 1 to 15,
which connecting module (2, 2') is set up in such a way that users of mobile devices (1) are able to connect at least certain of the mobile devices (1) to the low voltage grid (41) in each case by means of the connecting module (2, 2'), the connecting module (2, 2') comprising a connecting plug for connection to the low voltage grid (41), by means of which connecting plug the connecting module is connectible to the low voltage grid (41) via outlets (3, 3') of the low voltage grid (41), and the connecting module (2, 2') comprising an interface module (23) for connection with a respective mobile device (1), and
which connecting module (2, 2') comprises a suitable power line communications module (21), by means of which the respective mobile device (1) is able to communicate via the low voltage grid (41) with other units which are connected to the low voltage grid (41) via a power line communications module (51).

32. The connecting module (2, 2') according to the preceding claim, wherein it has stored address data by means of which it is addressable in the low voltage grid (41).

33. The connecting module (2, 2') according to one of the claims 31 to 32, wherein the interface module (23) comprises an interface with contacts, a contactless infrared interface, a contactless inductive interface and/or a contactless high frequency radio interface.

34. The connecting module (2, 2') according to one of the claims 31 to 33, wherein it comprises a charging module by means of which an energy storage device for operation of a mobile device (1) is chargeable on the low voltage grid (41).

35. The connecting module according to one of the claims 31 to 34, wherein the at least certain mobile devices (1) each comprise a mobile radio telephone.

## Revendications

1. Système de communication comprenant une pluralité d'appareils mobiles (1, 91'), auxquels sont individuellement reliés des modules d'identification (12), une identification de l'utilisateur (123) de l'appareil mobile (1) respectif étant mémorisée dans les modules d'identification (12), le système de communication comprenant au moins un enregistreur de localisation des visiteurs (5), des identifications des utilisateurs (123) étant transmises au moyen d'un des appareils mobiles (1) à l'enregistreur de localisation des visiteurs (5) où elles sont mémorisées, le système de communication comprenant au moins un enregistreur de localisation nominal (6) où les identifications d'utilisateur sont associées chacune à un numéro d'appel et à d'autres données d'utilisateur, les données d'utilisateur comprenant des informations de séjour d'un utilisateur correspondant, les informations de séjour étant transmises d'un enregistreur de localisation des visiteurs (5) à l'enregistreur de localisation nominal (6) d'un utilisateur, **caractérisé en ce que**
le système de communication comprend des modules de connexion (2, 2') au moyen desquels modules de connexion (2, 2') un des appareils mobiles (1) est connectable par un utilisateur à un réseau basse tension (41), les modules de connexion (2, 2') comprenant chacun une fiche de connexion pour la connexion au réseau basse tension (41), au moyen duquel les modules de connexion (2, 2') sont connectables au réseau basse tension (41) par des prises (3, 3') du réseau basse tension (41), et les modules de connexion (2, 2') comprenant un module interface pour la connexion à l'appareil mobile (1) correspondant, et **en ce que**
les modules de connexion (2, 2') comprennent chacun un module de communication à ligne de courant (21) adapté, au moyen duquel l'appareil mobile (1) correspondant peut communiquer via le réseau basse tension (41) avec d'autres unités (5) connectées au réseau basse tension (41) par l'intermédiaire d'un module de communication à ligne de courant (51).

2. Système de communication selon la revendication précédente, **caractérisé en ce qu'**il comprend au moins un enregistreur de localisation des visiteurs (5) relié par le module de communication à ligne de courant (51) à un réseau basse tension (41) au moins, et **en ce que** des identifications d'utilisateur (123) sont transmissibles des appareils mobiles (1) correspondants à cet enregistreur de localisation des visiteurs de réseau électrique (5) via le réseau basse tension (41).

3. Système de communication selon la revendication précédente, **caractérisé en ce que** l'enregistreur de localisation des visiteurs de réseau électrique (5) comprend un tableau (54) où des informations d'adresse relatives aux modules de connexion (2, 2') sont associées à des indentifications d'utilisateur correspondantes et mémorisées.

4. Système de communication selon la revendication précédente, **caractérisé en ce que** l'enregistreur de localisation des visiteurs de réseau électrique (5) communique à l'enregistreur de localisation nominal (6, 6') d'un utilisateur un numéro itinérant relatif à l'appareil mobile (1) de cet utilisateur, et **en ce que** les numéros itinérants sont en outre associés à des identifications d'utilisateur correspondantes et mémorisés dans le tableau (54).

5. Système de communication selon la revendication précédente, **caractérisé en ce qu'**au moins certains numéros itinérants comprennent des informations d'adresse relatives à un module de connexion (2, 2').

6. Système de communication selon l'une des revendications 2 à 5, **caractérisé en ce qu'**au moins certaines informations de séjour comprennent des informations d'adresse relatives à l'enregistreur de localisation des visiteurs de réseau électrique (5).

7. Système de communication selon l'une des revendications 2 à 6, **caractérisé en ce que** le système de communication comprend un réseau de connexion (8) par lequel l'enregistreur de localisation des visiteurs de réseau électrique (5) peut communiquer avec au moins un enregistreur de localisation nominal (6) et/ou au moins un centre de commutation mobile (7).

8. Système de communication selon la revendication précédente, **caractérisé en ce que** le réseau de connexion (8) comprend un système de signalisation SS7, ou bien est l'Internet ou encore un intranet.

9. Système de communication selon l'une des revendications 7 à 8, **caractérisé en ce que** l'enregistreur de localisation des visiteurs de réseau électrique (5) est configuré de manière à pouvoir communiquer avec d'autres unités de réseau (6, 6', 7) raccordées au réseau de connexion (8) au moyen de messages MAP.

10. Système de communication selon l'une des revendications 7 à 9, **caractérisé en ce que** l'enregistreur de localisation des visiteurs de réseau électrique (5) comprend un module passerelle (53), ledit module passerelle (53) pouvant transmettre à des appareils mobiles (1) correspondants des appels d'appareils terminaux ayant été transmis à l'enregistreur de localisation des visiteurs de réseau électrique (5) via le réseau de connexion (8), et ledit module passerelle (53) pouvant transmettre via le réseau de connexion (8) des appels d'appareils mobiles (1) correspondants à une unité de réseau correspondante, notamment à un deuxième enregistreur de localisation des visiteurs de réseau électrique, pour transmission à un appareil terminal appelé.

11. Système de communication selon l'une des revendications 2 à 10, **caractérisé en ce que** l'enregistreur de localisation des visiteurs de réseau électrique (5) comprend un module passerelle (53), ledit module passerelle (53) pouvant transmettre des appels d'appareils terminaux (91, 91') à des appareils mobiles (1) correspondants, lesdits appels ayant été reçus d'un centre de commutation mobile (7) et ayant été transmis à l'enregistreur de localisation des visiteurs de réseau électrique (5), et ledit module passerelle (53) pouvant transmettre des appels d'appareils mobiles (1) correspondants à un centre de commutation mobile (7) correspondant, pour transmission à un appareil terminal (91, 91') appelé.

12. Système de communication selon l'une des revendications 2 à 11, **caractérisé en ce que** l'enregistreur de localisation des visiteurs de réseau électrique (5) comprend un module de calcul (52) pouvant saisir et imputer les services exécutés pour un appareil mobile (1) correspondant.

13. Système de communication selon la revendication précédente, **caractérisé en ce que** le module de calcul (52) peut imputer les services saisis à un appareil mobile (1) correspondant directement via le réseau basse tension (41).

14. Système de communication selon l'une des revendications précédentes, **caractérisé en ce que** le module interface (23) comprend une interface équipée de contacts, une interface infrarouge sans contacts, une interface inductive sans contacts et/ou une interface radio haute fréquence sans contacts.

15. Système de communication selon l'une des revendications précédentes, **caractérisé en ce que** les modules de connexion (2, 2') comprennent des modules de charge au moyen desquels des accumulateurs de courant sont chargeables pour l'exploitation des appareils mobiles (1) sur le réseau basse tension (41).

16. Procédé de communication où des identifications (123) des utilisateurs d'une pluralité d'appareils mobiles (1, 91') sont mémorisées dans un module d'identification (12), les modules d'identification (12) étant reliés aux appareils mobiles (1, 91), des identifications des utilisateurs (123) étant transmises dans le procédé de communication au moyen d'un des appareils mobiles (1) à l'enregistreur de localisation des visiteurs (5) où elles sont mémorisées, et les identifications d'utilisateur étant dans le procédé de communication associées chacune à un numéro d'appel et à d'autres données d'utilisateur et mémorisées dans un enregistreur de localisation nominal (6), les données d'utilisateur comprenant des informations de séjour d'un utilisateur correspondant, les informations de séjour étant transmises d'un enregistreur de localisation des visiteurs (5) à l'enregistreur de localisation nominal (6) d'un utilisateur, **caractérisé en ce que**
au moins certains appareils mobiles (1) sont raccordés par un module de connexion (2) à un réseau basse tension (41), le module de connexion (2, 2') correspondant étant raccordé au réseau basse tension (41) au moyen d'une fiche de connexion du module de connexion (2, 2') correspondant reliée à une prise (3, 3') du réseau basse tension (41), et le module de connexion (2, 2') correspondant étant relié à l'appareil mobile (1) correspondant au moyen d'un module interface (23) du module de connexion (2, 2') correspondant, et
**en ce que** l'appareil mobile (1) correspondant peut au moyen d'un module de communication à ligne de courant (21) adapté du module de connexion (2, 2') correspondant communiquer via le réseau basse tension (41) avec d'autres unités (5) connectées au réseau basse tension (41) par l'intermédiaire d'un module de communication à ligne de courant (51).

17. Procédé de communication selon la revendication précédente, **caractérisé en ce qu'**au moins un enregistreur de localisation des visiteurs (5) est relié par un module de communication à ligne de courant (51) à un réseau basse tension (41) au moins, et **en ce que** des identifications d'utilisateur (123) sont transmissibles des appareils mobiles (1) correspondants à cet enregistreur de localisation des visiteurs de réseau électrique (5) via le réseau basse tension (41).

18. Procédé de communication selon la revendication précédente, **caractérisé en ce que** des informations d'adresse relatives aux modules de connexion (2, 2') sont associées à des indentifications d'utilisateur correspondantes et mémorisées dans un tableau (54) de l'enregistreur de localisation des visiteurs de réseau électrique (5).

19. Procédé de communication selon la revendication précédente, **caractérisé en ce que** l'enregistreur de localisation des visiteurs de réseau électrique (5) communique à l'enregistreur de localisation nominal (6, 6') d'un utilisateur un numéro itinérant relatif à l'appareil mobile (1) de cet utilisateur, et **en ce que** les numéros itinérants sont en outre associés à des identifications d'utilisateur correspondantes et mémorisés dans le tableau (54).

20. Procédé de communication selon la revendication précédente, **caractérisé en ce qu'**au moins certains numéros itinérants comprennent des informations d'adresse relatives à un module de connexion (2, 2').

21. Procédé de communication selon l'une des revendications 17 à 20, **caractérisé en ce qu'**au moins certaines informations de séjour comprennent des informations d'adresse relatives à l'enregistreur de localisation des visiteurs de réseau électrique (5).

22. Procédé de communication selon l'une des revendications 17 à 21, **caractérisé en ce que** l'enregistreur de localisation des visiteurs de réseau électrique (5) communique via un réseau de connexion (8) avec au moins un enregistreur de localisation nominal (6) et/ou au moins un centre de commutation mobile (7).

23. Procédé de communication selon la revendication précédente, **caractérisé en ce que** le réseau de connexion (8) comprend un système de signalisation SS7, ou bien est l'Internet ou encore un intranet.

24. Procédé de communication selon l'une des revendications 22 à 23, **caractérisé en ce que** l'enregistreur de localisation des visiteurs de réseau électrique (5) communique au moyen de messages MAP avec d'autres unités de réseau (6, 6', 7) raccordées au réseau de connexion (8).

25. Procédé de communication selon l'une des revendications 22 à 24, **caractérisé en ce que** l'enregistreur de localisation des visiteurs de réseau électrique (5) transmet au moyen du module passerelle (53) à au moins certains appareils mobiles (1) correspondants des appels d'appareils terminaux ayant été transmis à l'enregistreur de localisation des visiteurs de réseau électrique (5) via le réseau de connexion (8), et **en ce que** l'enregistreur de localisation des visiteurs de réseau électrique (5) transmet via le réseau de connexion (8) et au moyen de ce module passerelle (53) des appels de ces certains appareils mobiles (1) au moins à une unité de réseau correspondante, notamment à un deuxième enregistreur de localisation des visiteurs de réseau électrique, pour transmission à un appareil terminal appelé.

26. Procédé de communication selon l'une des revendications 17 à 25, **caractérisé en ce que** l'enregistreur de localisation des visiteurs de réseau électrique (5) transmet à au moins certains appareils mobiles (1) correspondants des appels d'appareils terminaux (91, 91') reçus d'un centre de commutation mobile (7) et ayant été transmis à l'enregistreur de localisation des visiteurs de réseau électrique (5), au moyen d'un module passerelle (53), ou bien transmet des appels de ces certains appareils mobiles (1) au moins à un centre de commutation mobile (7) correspondant, pour transmission à un appareil terminal (91, 91') appelé.

27. Procédé de communication selon l'une des revendications 17 à 26, **caractérisé en ce que** l'enregistreur de localisation des visiteurs de réseau électrique (5) saisit et impute au moyen d'un module de calcul (52) les services exécutés pour un certain appareil mobile (1) correspondant au moins.

28. Procédé de communication selon l'une des revendications 16 à 27, **caractérisé en ce que** le module de calcul (52) impute les services saisis à un certain appareil mobile (1) correspondant au moins, directement via le réseau basse tension (41).

29. Procédé de communication selon l'une des revendications 16 à 28, **caractérisé en ce que** le module interface (23) comprend une interface équipée de contacts, une interface infrarouge sans contacts, une interface inductive sans contacts et/ou une interface radio haute fréquence sans contacts.

30. Procédé de communication selon l'une des revendications 16 à 29, **caractérisé en ce que** les modules de connexion (2, 2') chargent des accumulateurs de courant pour l'exploitation des appareils mobiles (1) sur le réseau basse tension (41) au moyen de modules de charge.

31. Module de connexion (2, 2') pour un système de communication selon l'une des revendications 1 à 15,
ledit module de connexion (2, 2') étant configuré de manière que les utilisateurs d'appareils mobiles (1) puissent connecter au moins certains appareils mobiles (1) à un réseau basse tension (41) au moyen du module de connexion (2, 2'), le module de connexion (2, 2') comprenant une fiche de connexion pour le raccordement au réseau basse tension (41), au moyen de laquelle le module de connexion (2, 2') est connectable au réseau basse tension (41) par une prise (3, 3') du réseau basse tension (41), et le module de connexion (2, 2') comprenant un module interface (23) pour le raccordement à un appareil mobile (1) correspondant, et
le module de connexion (2, 2') comprenant un module de communication à ligne de courant (21) adapté, au moyen duquel l'appareil mobile (1) correspondant peut communiquer via le réseau basse tension (41) avec d'autres unités (5) connectées au réseau basse tension (41) par l'intermédiaire d'un module de communication à ligne de courant (51).

32. Module de connexion (2, 2') selon la revendication précédente, **caractérisé en ce qu'**il a mémorisé des informations d'adresse par lesquelles il est adressable dans le réseau basse tension (41).

33. Module de connexion (2, 2') selon l'une des revendications 31 et 32, **caractérisé en ce que** le module interface (23) comprend une interface équipée de contacts, une interface infrarouge sans contacts, une interface inductive sans contacts et/ou une interface radio haute fréquence sans contacts.

34. Module de connexion (2, 2') selon l'une des revendications 31 à 33, **caractérisé en ce qu'**il comprend un module de charge au moyen duquel un accumulateur de courant est chargeable pour l'exploitation d'un appareil mobile (1) sur le réseau basse tension (41).

35. Module de connexion (2, 2') selon l'une des revendications 31 à 34, **caractérisé en ce que** les certains appareils mobiles (1) au moins comprennent chacun un téléphone mobile.
